## Europäisches Patentamt

## European Patent Office

## Office européen des brevets

(19)

(11) Numéro de publication: **0 119 125**
**B1**

(12) # FASCICULE DE BREVET EUROPÉEN

(45) Date de publication du fascicule du brevet:
03.02.88

(51) Int. Cl.⁴: **G 21 C 13/08**, G 21 C 5/10

(21) Numéro de dépôt: **84400372.3**

(22) Date de dépôt: **24.02.84**

(54) **Cuve de réacteur nucléaire à neutrons rapides.**

(30) Priorité: **25.02.83 FR 8303153**

(43) Date de publication de la demande:
**19.09.84 Bulletin 84/38**

(45) Mention de la délivrance du brevet:
**03.02.88 Bulletin 88/5**

(84) Etats contractants désignés:
**BE DE GB IT LU NL**

(56) Documents cité:
**FR-A-2 373 857**
**FR-A-2 461 335**
**FR-A-2 461 336**
**GB-A-852 840**
**GB-A-2 071 396**
**US-A-3 793 145**
**US-A-4 330 371**

**NUCLEAR ENGINEERING INTERNATIONAL, vol. 23, no. 272, juin 1978, pages 43-60, Londres, GB M. BANAL et al.: "Construction of the world's first full-scale fast breeder reactor"**

(73) Titulaire: **NOVATOME, La Boursidière R.N. 186, F-92357 Le Plessis Robinson (FR)**

(72) Inventeur: **Presciuttini, Léonardo, 89 rue Houdan, F-92330 Sceaux (FR)**

(74) Mandataire: **Mongrédien, André, c/o BREVATOME 25, rue de Ponthieu, F-75008 Paris (FR)**

## Description

L'invention concerne une cuve principale de réacteur nucléaire à neutrons rapides.

Dans les réacteurs nucléaires à neutrons rapides, la cuve principale du réacteur contient le fluide de refroidissement du réacteur qui est généralement du sodium liquide. Le coeur du réacteur est plongé dans le sodium liquide remplissant la cuve jusqu'à un certain niveau, ce sodium liquide étant surmonté par une atmosphère de gaz neutre. La cuve principale est symétrique de révolution autour d'un axe vertical et comporte une partie supérieure constituée par une virole cylindrique à axe vertical fixée à sa partie supérieure à la dalle horizontale fermant la cuve et reposant sur la structure du réacteur.

La partie inférieure de la cuve est constituée par un fond bombé se raccordant à la partie inférieure de la virole cylindrique.

Le coeur du réacteur est supporté par un platelage qui repose sur le fond de cuve suivant une zone correspondant sensiblement à un cercle horizontal centré sur l'axe de la cuve.

La cuve principale est également doublée par une seconde cuve appelée cuve de sécurité, un espace étant ménagé entre la cuve principale et la cuve de sécurité. Cette cuve de sécurité peut être liée directement à la protection biologique en béton qui entoure l'ensemble des deux cuves.

La cuve principale est réalisée en acier inoxydable et la cuve de sécurité peut être réalisée soit dans une nuance d'acier inoxydable identique soit dans une nuance différente moins coûteuse, voire acier noir.

Le fond bombé de la cuve principale ainsi que le fond bombé de la cuve de sécurité présente une méridienne en forme d'anse de panier, c'est-à-dire une courbe constituée par des portions de cercle se raccordant sans point anguleux.

La partie supérieure du fond bombé est constituée par une portion de tore dont la partie supérieure se raccorde à la virole cylindrique de la cuve et dont la partie inférieure se raccorde à une calotte sphérique fermant la partie torique et constituant la partie inférieure du fond bombé. Cette forme classique de fond bombé utilisée en chaudronnerie est appelée "fond avec rayon de carre".

Le fond de la cuve principale est soumis d'une part à la pression hydrostatique du sodium liquide remplissant cette cuve et d'autre part à la charge correspondant au coeur et au platelage qui repose sur le fond de cuve. Le platelage repose sur le fond de cuve au voisinage de la zone de raccordement entre la partie torique et la partie sphérique du fond de cuve.

Les fonds de cuve avec rayon de carre construits actuellement ne sont pas parfaitement adaptés aux deux types de chargement qu'ils doivent supporter, c'est-à-dire le chargement à pression répartie du sodium liquide et le chargement à effort concentré du platelage.

Il est donc nécessaire d'augmenter l'épaisseur moyenne de la cuve principale et de renforcer localement cette cuve principale, au niveau du cercle d'appui du platelage sur le fond de cuve.

Dans le cas d'un réacteur nucléaire à neutrons rapides construit actuellement dont le diamètre de la cuve principale est voisin de vingt mètres, la cuve principale a une épaisseur de quarante millimètres avec localement une épaisseur de soixante millimètres pour le supportage du platelage.

La réalisation d'une telle cuve demande donc l'utilisation d'une grande masse d'acier inoxydable, ce qui augmente son coût de construction.

On a également proposé, dans la demande de brevet GB-A-2 071 396 de prévoir dans un fond de cuve devant recevoir une charge concentrée au voisinage d'un cercle générateur de la cuve, des protubérances dirigées vers l'extérieur de la cuve, suivant le cercle d'appui de la charge. On peut également réaliser le fond de cuve en deux parties courbes qui se raccordent suivant le cercle d'appui de la charge. Dans tous les cas la méridienne de la cuve comporte deux points anguleux correspondant à la zone d'appui; la charge constituée par la virole de support de coeur se raccorde au niveau de la méridienne en faisant un angle avec l'axe de la cuve.

De manière générale, une telle forme de cuve permet de diminuer l'épaisseur de la paroi mais seulement de façon très limitée, si certaines conditions relatives à la géométrie du fond de cuve ne sont pas respectées.

L'objet de l'invention est donc de proposer une cuve principale de réacteur nucléaire à neutrons rapides renfermant du métal liquide dans lequel est plongé le coeur du réacteur, reposant sur la cuve par l'intermédiaire d'un support, cette cuve étant symétrique de révolution autour d'un axe vertical (ZZ') et constituée par une virole cylindrique à axe vertical fermée à sa partie inférieure par un fond bombé également de révolution autour de l'axe (ZZ') de la cuve et dont le profil vertical comporte deux points anguleux (A et B) situés sensiblement à la zone d'appui du support de coeur comportant une virole verticale d'axe confondu avec l'axe (ZZ') de la cuve qui repose sur le fond bombé de la cuve aux points anguleux A et B, le fond bombé comportant deux parties courbes successives, cuve caractérisée en ce que l'une des parties courbes est un secteur sphérique se raccordant à la partie inférieure de la virole, de même rayon (R1) que cette virole et l'autre partie courbe est une calotte sphérique de rayon (R2) sensiblement supérieur au rayon (R1) du secteur sphérique, de telle sorte que l'angle des tangentes aux cercles méridiens du secteur et de la calotte sphérique aux points anguleux (A et B) soit compris entre 15° et 20° et en ce que la virole du support de coeur est cylindrique et repose en appui vertical sur le fond bombé (15b).

Afin de bien faire comprendre l'invention, on va maintenant décrire à titre d'exemple non limitatif une cuve d'un réacteur nucléaire à neutrons rapides suivant l'art antérieur et une cuve pour un réacteur nucléaire à neutrons rapides suivant l'invention.

La figure 1 est une coupe par un plan vertical de symétrie du bloc réacteur d'un réacteur nucléaire à neutrons rapides suivant l'art antérieur.

La figure 2 est une vue en coupe par un plan vertical de symétrie d'une cuve principale suivant l'invention destinée à un réacteur nucléaire à neutrons rapides.

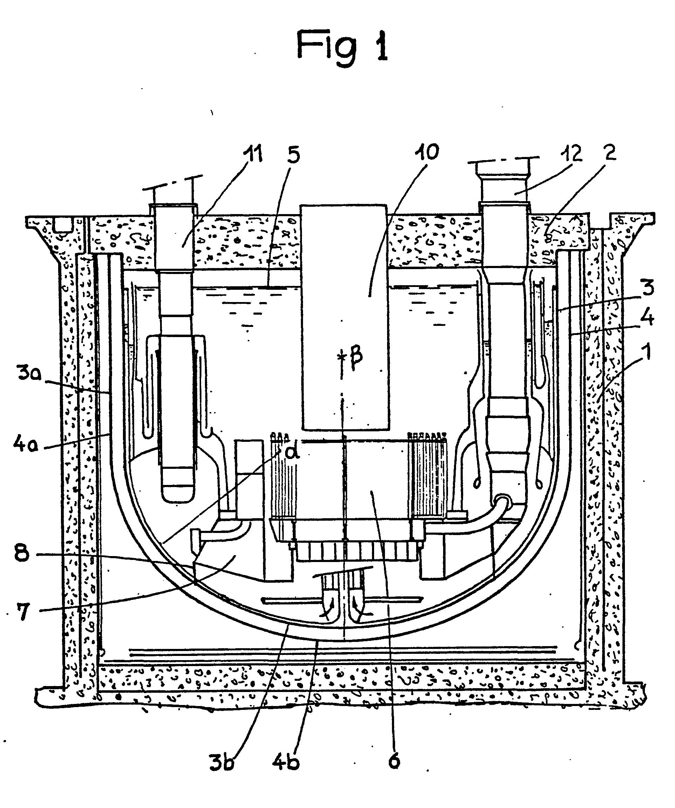

Sur la figure 1, on voit un réacteur nucléaire à neutrons rapides de type intégré comportant une structure en béton 1 supportant une dalle 2 sur laquelle sont fixées par leur partie supérieure la cuve principale 3 et la cuve de sécurité 4.

La cuve de sécurité 3 renferme du sodium liquide jusqu'au niveau 5. Le coeur 6 du réacteur plonge entièrement dans le sodium liquide et repose sur un platelage 7. Le platelage 7 est lui-même en appui par une virole 8 sur le fond de la cuve 3.

Des ouvertures sont prévues dans la dalle pour le passage du bouchon couvercle coeur 10 des échangeurs intermédiaires 11 et des pompes 12 plongeant sous le niveau du sodium liquide.

La cuve principale 3 et la cuve de sécurité 4 ont la même forme et sont disposées avec un certain espacement.

Chacune de ces cuves comporte une partie cylindrique à axe vertical $3_a$ (ou $4_a$) et un fond bombé $3_b$ (ou $4_b$).

Le fond bombé des cuves 3 et 4 comporte lui-même une partie torique se raccordant à sa partie supérieure, à la virole cylindrique et à sa partie inférieure, au voisinage de la zone d'appui de la virole 8 du platelage, à une calotte sphérique fermant la cuve vers le bas.

On voit sur la figure 1 que la partie torique du fond bombé de la cuve principale a pour méridienne une portion de cercle de centre non situé sur l'axe vertical de la cuve. La calotte sphérique constituant la partie inférieure du fond bombé a pour méridienne une portion de cercle de centre situé sur l'axe de la cuve. On voit également que les méridiennes de la partie torique et de la partie sphérique de la cuve se raccordent sans point anguleux au voisinage du point de contact de la virole d'appui 8 du platelage.

La cuve de sécurité 4 a une forme identique à la cuve principale 3.

Cette forme de cuve n'est pas optimale pour résister à la fois à la pression d'appui due au sodium liquide remplissant la cuve répartie sur toute la surface du fond bombé et la pression d'appui localisée de la virole 8 du platelage sur le fond de cuve.

Il est donc nécessaire d'augmenter l'épaisseur moyenne de la cuve et de disposer localement, au voisinage de la zone d'appui du platelage, d'une surépaisseur de métal.

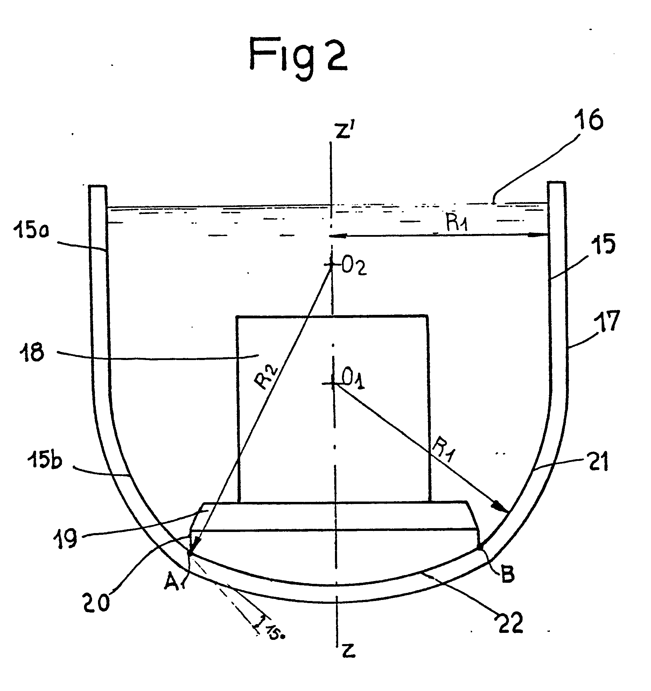

En se reportant à la figure 2, on voit une cuve principale 15 d'un réacteur nucléaire à neutrons rapides de type intégré renfermant du sodium liquide jusqu'à un niveau 16 dans lequel est plongé le coeur 18 du réacteur nucléaire reposant sur un platelage 19 lui-même en appui sur le fond de la cuve 15 par l'intermédiaire d'une virole cylindrique 20.

La cuve principale 15 est doublée par une cuve de sécurité 17 équidistante en tous ses points de la cuve 15. La cuve principale 15 et la cuve de sécurité 17 ont donc des formes identiques.

La cuve 15 comporte une partie supérieure constituée par une virole cylindrique $15_a$ de rayon $R_1$ et une partie inférieure constituée par un fond bombé $15_b$ se raccordant à la partie inférieure de la virole cylindrique $15_a$ et fermant la cuve vers le bas.

Le fond bombé $15_b$ comporte lui-même deux parties, à savoir un secteur sphérique 21 constituant sa partie supérieure et une calotte sphérique 22 constituant sa partie inférieure se raccordant au niveau de la zone d'appui de la virole 20 du platelage sur le fond de cuve $15_b$. Le secteur sphérique 21, centré sur l'axe de la cuve, a un rayon $R_1$ égal au rayon de la virole cylindrique $15_a$ de la cuve.

La calotte sphérique 22, également centrée sur l'axe de la cuve, a un rayon $R_2$ sensiblement plus grand que $R_1$. Ainsi qu'il est visible sur la figure 2, les méridiennes du secteur sphérique 21 et de la calotte sphérique 22 constituées par des portions de cercle centrées sur l'axe ZZ' de la cuve se raccordent en A et B en constituant des points anguleux. Ces points A et B correspondent au cercle d'appui de la virole 20 du platelage, sur le fond de cuve $15_b$.

Aux points A et B, les tangentes aux cercles méridiens du secteur sphérique 21 et de la calotte sphérique 22 respectivement font un angle de l'ordre de 15°. Le rayon du cercle d'appui de la virole 20 sur le fond de cuve est égal aux deux-tiers du rayon $R_1$ de la partie cylindrique de la cuve.

Dans ce cas, la valeur du rayon $R_2$ de la calotte sphérique 22 est approximativement une fois et demi la valeur du rayon du secteur sphérique 21.

Cette nouvelle forme de cuve permet de réduire les contraintes et de les rendre plus uniformes si bien qu'il devient possible d'utiliser une épaisseur de fond de cuve constante pour toutes les parties du fond de cuve.

Par exemple, dans le cas d'une cuve dont la partie cylindrique a un diamètre $R_1$ de l'ordre de dix mètres, il est possible d'utiliser une paroi de cuve d'une épaisseur constante égale à trente-cinq millimètres. Les contraintes dans cette paroi dues au chargement uniforme par le sodium et au chargement localisé par le platelage s'appuyant dans une zone circulaire de rayon deux-tiers de $R_1$ sont beaucoup plus uniformes et réduites d'environ un-tiers par rapport à une cuve de l'art antérieur comportant un fond avec rayon de carre.

Dans ce cas le rayon $R_1$ du secteur sphérique 21 est de dix mètres et le rayon $R_2$ de la calotte sphérique 22 est de quinze mètres.

La cuve de sécurité a un profil sensiblement identique à la cuve principale, pour faciliter les opérations d'inspection des cuves par envoi d'un appareillage mobile dans l'espace entre ces deux cuves 15 et 17.

On voit que les principaux avantages de la cuve suivant l'invention sont de permettre de réduire les contraintes dues au chargement uniforme par le sodium et au chargement local par le platelage, de rendre ces contraintes plus uniformes et de permettre de diminuer l'épaisseur moyenne de la cuve à diamètre égal de celle-ci et enfin d'utiliser une épaisseur de paroi constante.

L'invention ne se limite pas au mode de réalisation qui a été décrit; c'est ainsi que l'angle des tangentes aux méridiennes du secteur sphérique et de la calotte sphérique peut être différent de 15°. Cet angle peut varier entre 15 et 20°. Pour un appui de la virole 20 du platelage dans une zone circulaire de rayon deux-tiers da $R_1$, ceci correspond à un rapport $R_2/R_1$ variant approximativement entre 1,5 et 1,8.

On peut également utiliser un platelage dont le rayon du cercle d'appui est différent des deux-tiers du rayon de la cuve, par exemple un platelage dont le rayon d'appui est supérieur à cette valeur.

Enfin, la structure de cuve suivant l'invention s'applique dans tous les cas où un fond de cuve bombé doit supporter à la fois un chargement uniforme et un chargement localisé dans une zone circulaire.

**Revendications**

1. Cuve principale de réacteur nucléaire à neutrons rapides renfermant du métal liquide dans lequel est plongé le coeur (18) du réacteur, reposant sur la cuve (15) par l'intermédiaire d'un support (19, 20), cette cuve étant symétrique de révolution autour d'un axe vertical (ZZ') et constituée par une virole cylindrique ($15_a$) à axe vertical fermée à sa partie inférieure par un fond bombé ($15_b$) également de révolution autour de l'axe (ZZ') de la cuve (15) et dont le profil vertical comporte deux points anguleux (A et B) situés sensiblement à la zone d'appui du support de coeur (19, 20) comportant une virole verticale (20) d'axe confondu avec l'axe (ZZ') de la cuve (15) qui repose sur le fond bombé ($15_b$) de la cuve (15) aux points anguleux A et B, le fond bombé ($15_b$) comportant deux parties courbes successives, caractérisée en ce que l'une des parties courbes est un secteur sphérique (21) se raccordant à la partie inférieure de la virole ($15_a$), de même rayon ($R_1$) que cette virole ($15_a$), et l'autre partie courbe est une calotte sphérique (22) de rayon ($R_2$) sensiblement supérieur au rayon ($R_1$) du secteur sphérique (21), de telle sorte que l'angle des tangentes aux cercles méridiens du secteur (21) et de la calotte sphérique (22) aux points anguleux (A et B) soit compris entre 15° et 20° et en ce que la virole (20) du support de coeur est cylindrique et repose en appui vertical sur le fond bombé ($15_b$).

2. Cuve de réacteur nucléaire suivant la revendication 1 dans le cas où le support de coeur (19, 20) s'appuie sur la cuve (15) suivant un cercle dont le rayon est sensiblement égal aux deux tiers du rayon de la partie cylindrique ($15_a$), caractérisée par le fait que le rayon de la calotte sphérique (22) est compris entre 1,5 et 1,8 fois le rayon de la partie cylindrique de la cuve (15).

3. Réacteur nucléaire comportant une cuve principale suivant l'une des revendications 1 et 2 disposée à l'intérieur d'une cuve de sécurité caractérisé en ce que la cuve de sécurité (17) est de forme identique à la cuve principale, l'espacement entre les cuves (15) et (17) étant constant.

**Patentansprüche**

1. Hauptbehälter eines schnellen Kernreaktors, der Flussigmetall umschließt, in dem der Reaktorkern (18) untergetaucht ist, der mittels einer Stütze (19, 20) auf dem Behälter (15) ruht, wobei dieser Behälter zu einer senkrechten Achse (ZZ') drehsymmetrisch und von einem zylindrischen Mantel (15a) mit vertikaler Achse gebildet ist, der an seinem unteren Teil von einem gewölbten, ebenfalls zu der Achse (ZZ') des Behälters (15) drehsymmetrischen Boden (15b) geschlossen ist, dessen vertikales Profil zwei winkelige Punkte (A und B) aufweist, die sich im wesentlichen in dem Stützbereich der Kernstütze (19, 20) befinden, die einen vertikalen Mantel (20) mit einer mit der Achse (ZZ') des Behälters (15) zusammenfallenden Achse aufweist, der auf dem gewölbten Boden (15b) des Behälters (15) an den zwei winkeligen Punkten A und B ruht, wobei der gewölbte Boden (15b) zwei gewölbte, aufeinanderfolgende Teile aufweist, dadurch gekennzeichnet, daß einer der gewölbten Teile ein Kugelausschnitt (21) ist, der sich an den unteren Teil des Mantels (15a) mit dem gleichen Radius ($R_1$) wie dieser Mantel (15a) anschließt, und der andere gewölbte Teil eine Kugelkalotte (22) mit im wesentlichen größeren Radius ($R_2$) als der Radius ($R_1$) des Kugelausschnitts (21) ist derart, daß der Winkel der Tangenten an den Meridiankreis des Ausschnitts (21) und die Kugelkalotte (22) an den winkeligen Punkten (A und B) zwischen 15 Grad und 20 Grad liegt, und daß der Mantel (20) der Kernstütze zylindrisch ist und sich senkrecht auf dem gewölbten Boden (15b) abstützt.

2. Kernreaktorbehälter nach Anspruch 1 für den Fall, bei dem sich die Kernstutze (19, 20) längs eines Kreises abstutzt, dessen Radius im wesentlichen gleich zwei Dritteln des Radius des zylindrischen Teils (15a) ist, dadurch gekennzeichnet, daß der Radius der Kugelkalotte (22) zwischen dem 1,5- und 1,8-fachen des Radius des zylindrischen Teils des Behälters (15) liegt.

3. Kernreaktor mit einem Hauptbehälter nach Anspruch 1 oder 2, der im Inneren eines Sicherheitsbehälters angeordnet ist, dadurch

gekennzeichnet, daß der Sicherheitsbehälter (17)
eine mit dem Hauptbehälter identische Form
besitzt, wobei der Abstand zwischen den zwei
Behältern (15) und (17) konstant ist.

## Claims

1. Main vessel of fast-neutron nuclear reactor containing liquid metal in which the reactor core (18) is immersed, resting on the vessel (15) through the intermediacy of a support (19, 20) this vessel being symetrical in revolution around a vertical axis (ZZ') and consisting of a cylindrical shell (15a) with a vertical axis and closed in its lower part by a convex bottom (15b) also of revolution around the axis (ZZ') of the vessel (15) and whose vertical profile includes two angular points (A) and (B) situated substantially in the region bearing the core support (19, 20) comprising a vertical shell (20) with its axis coinciding with the axis (ZZ') of the vessel (15) which rests on the convex bottom (15b) of the vessel (15) at the angular points A and B the convex bottom (15b) comprising two successive curved parts, which vessel is characterized in that one of curved parts is a spherical sector (21) connected to the lower part of the shell (15a), with the same radius ($R_1$) as this shell (15a), and the other curved part is a segment of a sphere (22) with a radius ($R_2$) appreciably greater than the radius ($R_1$) of the spherical sector (21), so that the angle of the tangents to the meridian circles of the sector (21) and of the segment of a sphere (22) at the angular points (A and B) is between 15° and 20° and in that the shell (20) of the core support is cylindrical and rests bearing vertically on the convex bottom (15b).

2. Nuclear reactor vessel according to Claim 1 in the case where the core support (19, 20) bears on the vessel (15) on a circle whose radius is substantially equal to two-thirds of the radius of the cylindrical part (15a), characterized in that the radius of the segment of a sphere (22) is between 1.5 and 1.8 times the radius of the cylindrical part of the vessel (15).

3. Nuclear reactor comprising a main vessel according to either of Claims 1 and 2 and arranged inside a safety vessel, characterized in that the safety vessel (17) is identical in shape with the main vessel, the spacing between the vessels (15) and (17) being uniform.

# Fig 1

# Fig 2